## Europäisches Patentamt

## European Patent Office

## Office européen des brevets

(19)

(11) Veröffentlichungsnummer: **0 075 562**
**B1**

(12) **EUROPÄISCHE PATENTSCHRIFT**

(45) Veröffentlichungstag der Patentschrift:
**11.09.85**

(51) Int. Cl.⁴: **A 01 J 5/04**, F 04 B 9/12

(21) Anmeldenummer: **82900909.1**

(22) Anmeldetag: **26.03.82**

(86) Internationale Anmeldenummer:
**PCT/AT 82/00008**

(87) Internationale Veröffentlichungsnummer:
**WO 82/03311 (14.10.82 Gazette 82/25)**

(54) **VORRICHTUNG ZUR ERZEUGUNG VON DRUCKLUFT BEIM MELKEN.**

(30) Priorität: **26.03.81 AT 1420/81**

(43) Veröffentlichungstag der Anmeldung:
**06.04.83 Patentblatt 83/14**

(45) Bekanntmachung des Hinweises auf die Patenterteilung:
**11.09.85 Patentblatt 85/37**

(84) Benannte Vertragsstaaten:
**CH DE FR GB LI SE**

(56) Entgegenhaltungen:
**DE - C - 904 858**
**DE - C - 918 665**
**FR - A - 2 034 282**
**US - A - 3 700 359**

(73) Patentinhaber: **LASCHOBER, Monika,
Triesterstrasse 229/3, A-1232 Wien (AT)**

(72) Erfinder: **LASCHOBER, Monika, Triesterstrasse 229/3,
A-1232 Wien (AT)**

## Beschreibung

Bisher wurde die Drucklufterzeugung zur Stimulation der Melkbereitschaft bzw. zum Melken mittels herkömmlichen vakuumbetriebenen Melkmaschinen durch stationäre Kompressoren oder ähnliche Drucklufterzeuger bewerkstelligt. Diese so erzeugte Druckluft wurde aufwendig über eigens dazu verlegte Rohrleitungen zum Melkplatz bzw. zur Melkeinheit geführt.

Dieses System hat den Nachteil, daß das Umrüsten einer bereits bestehenden herkömmlichen, nur mit Vakuum betriebenen Melkanlage, auf eine Melkanlage mit Druckluftanrüst- und Melksystem wegen der nachträglichen Anbringung eines stationären Kompressors oder ähnlichem Drucklufterzeuger und Verlegung einer zusätzlichen Rohrleitung sehr kostenintensiv und aufwendig ist. Dies gilt im Prinzip auch für Neuanschaffungen von Melkanlagen mit Druckluftanrüst- und Melksystem.

Aus dem Dokument DE-C-918 665 ist es bei vakuumbetriebenen Melkmaschinen bekannt, das Vakuum durch eine Kolbenpumpe zu erzeugen, die mit einem Druckluftkolbenmotor gekuppelt ist. Die Kolben der Vakuumkolbenpumpe und des Druckluftmotors sind auf einer gemeinsamen Kolbenstange angebracht.

Ferner ist es in einer vakuumbetriebenen Melkmaschine bekannt (FR-A-2 034 282), ein mit dem Vakuum dieser Melkmaschine betriebenen Motor zu benutzen, um die Milch aus den Melkbechern mit einer Kolbenpumpe zu pumpen. Ebenfalls sind hierbei die Kolben der Pumpe und des Motors auf einer gemeinsamen Stange angebracht.

Nachteile der für eine Drucklufterzeugung beschriebenen Art werden durch die erfindungsgemäße Neuerung gemäß des Anspruchs 1 vermieden. Die Drucklufterzeugung erfolgt direkt am Melkzeug durch die Kraft des Vakuums mittels eines Zylinders mit einer Vakuumkammer und zwei Druckkammern und Kolben im Pulsationsrhythmus des Melkmaschinenpulsators. Vorrichtungen zur stationären Drucklufterzeugung und Rohrleitungen zur Beförderung der Druckluft zum Melkplatz bzw. zur Beförderung der Druckluft zur Melkeinheit entfallen.

In der Zeichnung ist eine beispielsweise Ausführungsform des Erfindungsgegenstandes dargestellt.

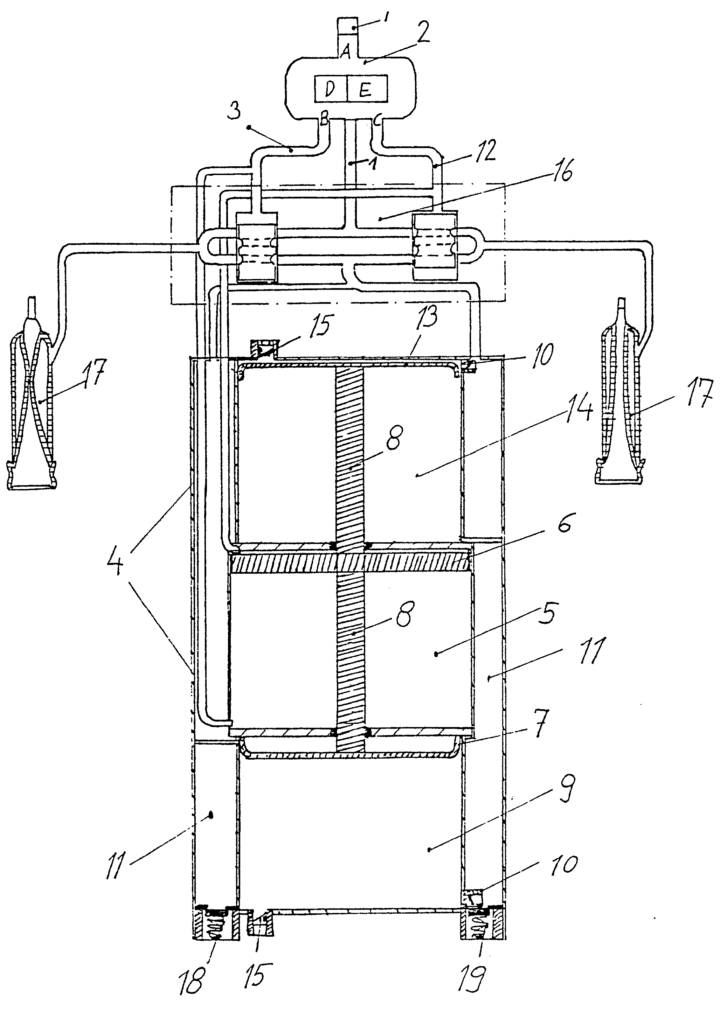

Fig. 1 zeigt einen Schnitt durch eine Melkeinheit mit Drucklufterzeuger.

Konstantvakuum von Leitung 1 saugt über Pulsator 2 A—B (gleichzeitig Leitung 12 über Weg C—E belüftet), Leitung 3 zur Druckluftpumpe 4, Kammer 5 den Kolben 6 zu Anschlußstück von Leitung 3; dabei wird Kolben 7, verbunden durch Gestänge 8, in Kammer 9 in Richtung Auslaßventil 10 gedrückt und wird somit die vorhandene atm. Luft in Kammer 9 komprimiert und über Ventil 10 in Ausgleichsbehälter 11 gepumpt.

Nach Umschaltung des Pulsators 2 von A zu C und Belüftung von D—B wird über Leitung 12 der Kolben 6 von Anschlußleitung 3 zur Anschlußleitung 12 gesaugt. Kolben 13 in Kammer 14 wird bis Auslaßöffnung 10 gedrückt und somit die vorhandene atm. Luft in Kammer 14 komprimiert und über Ventil 10 in den Ausgleichsbehälter 11 gepumpt. Kammer 9 wurde in dieser Phase durch Einlaßventil 15 mit atm. Luft gefüllt. Kammer 14 wird in umgekehrter Stellung von Einlaßventil 15 mit atm. Luft gefüllt.

Weitere Darstellung:

    16 = Umsteuerventile für Pulsation
    17 = Melkbecher mit Zitzengummi
    18 = Druckregelventil, max. Anrüstdruck,
         z. B. 0,5 bar
    19 = Druckregelventil für max. Melkdruck,
         z. B. 0,1 bar

Neben der Einfachheit bietet die erfindungsgemäße Vorrichtung die Möglichkeit, anstatt Melkmaschinenpulsator-Steuerung pneumatischer oder elektromagnetischer Steuerung der Druckluftpumpe.

## Patentansprüche

1. Vorrichtung zur Erzeugung von Druckluft durch einen Verdichter in einer vakuumbetriebenen Melkmaschine, wobei z. B. die Druckluft zum Stimulieren der Melkbereitschaft dient, dadurch gekennzeichnet, daß zum Antrieb dieses Verdichters ein mit dem Vakuum dieser Melkmaschine betriebener Motor vorgesehen ist.

2. Vorrichtung nach Anspruch 1, dadurch gekennzeichnet, daß der Verdichter als Kolbenverdichter (9, 7) ausgebildet ist und über eine Kolbenstange (8) direkt mit einem Kolben (6) des vakuumbetriebenen Motors (6, 5) verbunden ist.

3. Vorrichtung nach Anspruch 2, dadurch gekennzeichnet, daß der vakuumbetriebene Motor (6, 5) zweiseitig wirkend ausgebildet ist und an jeder Seite mittels der Kolbenstange (8) mit dem Kolben (7) eines Kolbenverdichters (9, 7) verbunden ist.

## Claims

1. Device for the generation of compressed air by way of a compressor in a vacuum-operated milking machine, where e.g. compressed air may be used to stimulate the animal's lactation; characterized by the fact that a motor operated by the vacuum of this milking machine is used to drive this compressor.

2. Device as per claim 1, characterized by the fact that the compressor is of the piston compressor type (9, 7) and connected directly to a piston of the vacuum-operated motor (6, 5) by means of a piston rod.

3. Device as per claim 2, characterized by the fact that the vacuum-operated motor (6, 5) is designed for bidirectional operation and is connected to the piston (7), of a piston compressor (9, 7) by means of the piston rod (8).

## Revendications

1. Dispositif servant à la génération d'air comprimé au moyen d'un compresseur dans une machine à traire actionnée à vide, dans laquelle l'air comprimé pourrait servir à stimuler la lactation; caractérisé par le fait qu'un moteur actionné par le vide de cette machine à traire est utilisé pour entraîner ce compresseur.

2. Dispositif d'après spécification no. 1, caractérisé par le fait que le compresseur est construit en forme de compresseur à piston (9, 7) et lié, au moyen d'une tige de piston (6), directement au piston du moteur actionné à vide (6, 5).

3. Dispositif d'après spécification no. 2, caractérisé par le fait que le moteur actionné à vide (6, 5) opérant avec effet bilatéral est lié, au moyen de la tige de piston (6), à chaque côté au piston (7) d'un compresseur à piston (9, 7).